(19) Europäisches Patentamt
European Patent Office
Office européen des brevets

(11) **EP 4 517 267 A1**

(12) **EUROPEAN PATENT APPLICATION**
published in accordance with Art. 153(4) EPC

(43) Date of publication:
**05.03.2025 Bulletin 2025/10**

(21) Application number: **22932494.2**

(22) Date of filing: **24.10.2022**

(51) International Patent Classification (IPC):
***G01C 21/34*** (2006.01)    ***B60W 30/06*** (2006.01)

(52) Cooperative Patent Classification (CPC):
**B60W 30/06; B60W 40/10; G01C 21/34**

(86) International application number:
**PCT/CN2022/127122**

(87) International publication number:
**WO 2023/206995 (02.11.2023 Gazette 2023/44)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **27.04.2022 CN 202210450169**

(71) Applicant: **Guangzhou Automobile Group Co.,
Ltd.**
**Guangzhou, Guangdong 510030 (CN)**

(72) Inventors:
• **ZHANG, Zhide**
  **Guangzhou, Guangdong 511434 (CN)**
• **LAN, Xiaoming**
  **Guangzhou, Guangdong 511434 (CN)**

(74) Representative: **Zaboliene, Reda**
**Metida**
**Business center Vertas**
**Gyneju str. 16**
**01109 Vilnius (LT)**

(54) **PARKING PATH PLANNING METHOD AND SYSTEM**

(57)    The present application discloses a planning parking path method and system. The method includes obtaining location information of a target parking space, and obtaining one or more parking paths inside the target parking space by performing path planning in the parking space according to the location information of the target parking space and a preset geometric algorithm, and determining a parking end point $P_1$ of a planning path outside the target parking space according to the one or more parking paths inside the target parking space, and obtaining current location information of an ego vehicle and determining a parking start point $P_0$ of the planning path outside the target parking space according to the current location information of the ego vehicle, and obtaining a parking path outside the parking space by executing path planning outside the parking space according to the parking start point $P_0$, the parking end point $P_1$ and a preset hybrid A* algorithm; and obtaining a complete parking path by splicing the parking path outside the parking space and the parking path inside the parking space. Through the present disclosure, the parking path of the parking space in any posture can be quickly calculated, which facilitates automatic parking and improves the driving experience of the driver.

**FIG. 1**

**Description**

The present application claims the benefit and priority of Chinese patent application submitted to the China Patent Office on April 27, 2022, with application number 202210450169.1, entitled " PLANNING PARKING PATH METHOD AND SYSTEM," the content of which is hereby incorporated fully by reference herein into the present disclosure.

FIELD

The present disclosure relates to a field of driving assistance, especially relates to a parking path planning method and system.

BACKGROUND

Automatic parking refers that parking a vehicle in a parking space automatically without manual control. At present, most of the automatic parking adopts a traditional path planning method based on geometric algorithm, but using the geometric algorithm cannot obtain the parking path under any posture. In some cases, it is not applicable. Because in these cases, the parking space is small, and it is generally necessary to drive out and park again, which affects experience of a driver to use the vehicle. Parking is more difficult for the driver, and it is easy to fail to park, which affects the driver's vehicle experience.

SUMMARY

The present application is aim to provide a parking path planning method and system, which can quickly obtain the parking path in any posture, facilitating automatic parking and improving the driver's driving experience.

To achieve the aforementioned aim, the present disclosure proposes a parking path planning method, comprising the following steps:

obtaining location information of a target parking space, and obtaining one or more parking paths inside the target parking space by performing path planning in the parking space according to the location information of the target parking space and a preset geometric algorithm;

determining a parking end point $P_1$ of a planning path outside the target parking space according to the one or more parking paths inside the target parking space;

obtaining current location information of an ego vehicle and determining a parking start point $P_0$ of the planning path outside the target parking space according to the current location information of the ego vehicle;

obtaining a parking path outside the parking space by executing path planning outside the parking space according to the parking start point $P_0$, the parking end point $P_1$ and a preset hybrid A* algorithm; and

obtaining a complete parking path by splicing the parking path outside the parking space and the parking path inside the parking space.

Preferably, the obtaining one or more parking paths inside the target parking space by performing path planning in the parking space according to the location information of the target parking space and the preset geometric algorithm comprises:

determining a parking end point $P_2$ of the complete parking path according to the location information of the target parking space;

taking the parking end point $P_2$ as a starting point, planning the path inside the parking space for the ego vehicle to park out of the target parking space from the starting point to obtain the one or more parking paths inside the target parking space.

Preferably, the determining the parking end point $P_1$ of the planning path outside the target parking space according to the one or more parking paths inside the target parking space comprises:

when obtaining a parking path inside the parking space by parking the ego vehicle out of the target parking space, recording a location of a preset feature point of the ego vehicle as a key point when the ego vehicle parking out the target parking space successfully; and

determining the parking end point $P_1$ of the planning path outside the target parking space according to one or more key points corresponding to the one or more parking paths inside the target parking space.

Preferably, the method further comprises:

selecting an optimal key point from multiple key points as the parking end point $P_1$ of the planning path outside the target parking space without putting back the selected key point if there are a plurality of key points;

selecting an optimal key point from the remaining key points as the parking end point $P_1$ of the planning path outside the target parking space if planning the parking path outside the parking space fails according to the parking start point $P_0$, the parking end point $P_1$ and the preset hybrid A* algorithm and continuing to obtain the parking path outside the parking space by executing path planning outside the parking space according to the parking start point $P_0$, the reselected parking end point $P_1$ and the preset hybrid A* algorithm until obtaining a collision-free parking path outside the parking space.

Preferably, the selecting the optimal key point from the plurality of key points comprises:

obtaining each heading angle of the ego vehicle when the feature point of the ego vehicle is overlapped with each key point and obtaining a distance d between a corner point F of the ego vehicle when the head of the ego vehicle is close to the target parking space and a corner point A of the target parking space close to the corner point F; and
filtering the plurality of key points according to a plurality of heading angles and a plurality of distances d corresponding to the plurality of key points and obtaining an optimal key point according to a filtered result.

Preferably, the obtaining the parking path outside the parking space by executing path planning outside the parking space according to the parking start point $P_0$, the parking end point $P_1$ and the preset hybrid A* algorithm comprises:

obtaining obstacle information in the surrounding environment of the ego vehicle;
searching for paths according to the obstacle information, the parking start point $P_0$, the parking end point $P_1$ and the preset hybrid A* algorithm, and determining whether the ego vehicle will collide with an obstacle while the ego vehicle is driving from the parking start point $P_0$ to the parking end point $P_1$;
in response to a collision-free driving path is searched, outputting the collision-free driving path as the parking path outside the parking space; and
in response to no collision-free driving path being searched, determining that planning of the parking path outside the parking space fails, and reselecting the parking end point $P_1$ and repeating planning the parking path outside the parking space or ending.

Preferably, the preset feature point of the can is a center point of a rear axle of the ego vehicle.

The present disclosure also provides a planning parking path system comprising:

an inside parking space path planning unit, is configured to obtain location information of a target parking space, and obtaining one or more parking paths inside the target parking space by performing path planning in the parking space according to the location information of the target parking space and a preset geometric algorithm;
a first location information acquisition unit, is configured to determine the parking end point $P_1$ of a planning path outside the target parking space according to the one or more parking paths inside the target parking space;
a second location information acquisition unit, is configured to obtain current location information of the ego vehicle and determine a parking start point $P_0$ of the planning path outside the target parking space according to the current location information of the ego vehicle;
an outside parking space path planning unit, is configured to obtain a parking path outside the parking space by executing path planning outside the parking space according to the parking start point $P_0$, the parking end point $P_1$ and a preset hybrid A* algorithm; and
a path splicing unit, is configured to obtaining a complete parking path by splicing the parking path outside the parking space and the parking path inside the parking space.

Preferably, the inside parking space path planning unit comprising:

a location acquisition subunit, is configured to acquire the location information of the target parking space, and determine the parking end point $P_2$ of the complete parking path according to the location information of the target parking space;
a geometric path planning subunit, is configured to take the parking end point $P_2$ as a starting point, plan the path inside the parking space for the ego vehicle to park out of the target parking space from the starting point, and obtain the one or more parking paths inside the target parking space.

Preferably, the location acquisition subunit is configured to:

when obtain a parking path inside the parking space by parking the ego vehicle out of the target parking space, record a location of a preset feature point of the ego vehicle as a key point when the ego vehicle parking out the target parking space successfully; and
determine the parking end point $P_1$ of the planning path outside the target parking space according to one or more key points corresponding to the one or more parking paths inside the target parking space.

Preferably, the location acquisition subunit selects an optimal key point from multiple key points as the parking end point $P_1$ of the planning path outside the target parking space without putting back the selected key point if there are a plurality of key points; and
the path planning subunit selects an optimal key point from the remaining key points as the parking end point $P_1$ of the planning path outside the target parking space if planning the parking path outside the parking space fails according to the parking start point $P_0$, the parking end point $P_1$ and the preset hybrid A* algorithm and continue to obtain the parking path outside the parking space by executing path planning outside the parking space according to the parking start point $P_0$, the reselected

parking end point $P_1$ and the preset hybrid A* algorithm until obtain a collision-free parking path outside the parking space.

Preferably, the outside parking space path planning unit comprising:

an obstacle information acquisition subunit is used to obtain obstacle information in the surrounding environment of the ego vehicle; and

a hybrid A* subunit is used to search for paths according to the obstacle information, the parking start point $P_0$, the parking end point $P_1$ and the preset hybrid A* algorithm, and determine whether the ego vehicle will collide with an obstacle while the ego vehicle is driving from the parking start point $P_0$ to the parking end point $P_1$, and in response to a collision-free driving path is searched, output the collision-free driving path as the parking path outside the parking space; in response to no collision-free driving path being searched, determine that planning of the parking path outside the parking space fails, and reselect a parking end point $P_1$ and plan the parking path outside the parking space or end.

The present invention has at least the following beneficial effects:

The parking path planning is divided into two parts: the path planning in the parking space and the path planning outside the parking space, and the parking space is small and the parking difficulty is high. In the part of the path planning in the parking space, one or more paths inside the parking space are obtained by the path planning in the parking space according to the location information of the target parking space, and the parking end point of the path planning outside the parking space is determined according to the one or more paths inside the parking space. At the same time, the current position of the vehicle is taken as the parking starting point, and the parking path outside the parking space is obtained by the path planning outside the parking space through the hybrid A* algorithm; finally splicing the parking path outside the parking space with the corresponding parking path inside the parking space to obtain the complete parking path. The invention combines a geometric algorithm and a hybrid A* algorithm to carry out parking path planning for various parking spaces, wherein the hybrid A* can realize track solving under any attitude, and the geometric planning can take into account the planning efficiency, so that the parking path under any posture can be quickly solved, the success rate of the parking planning can be improved at the same time, parking is facilitated, and the user experience of parking can be greatly improved.

Additional features and advantages of embodiments of the disclosure will be set forth in the ensuing description.

BRIEF DESCRIPTION OF THE DRAWINGS

In order to more clearly illustrate the technical solutions in at least one embodiment of present disclosure or prior art, the following will briefly introduce drawings that need to be used in the description of the embodiments or the prior art. Obviously, the accompanying drawings in the following description are only some embodiments of the present disclosure. Those skilled in the art can also obtain other drawings based on these drawings without creative work.

FIG. 1 is a flowchart of a planning parking path method provided by an embodiment of the present disclosure.

FIG. 2 is a schematic diagram of a scene of a parking path planning in a parking space of block S2 provided by an embodiment of the present disclosure.

FIG. 3 is a flowchart of a planning parking path method provided by a specific embodiment of the present disclosure.

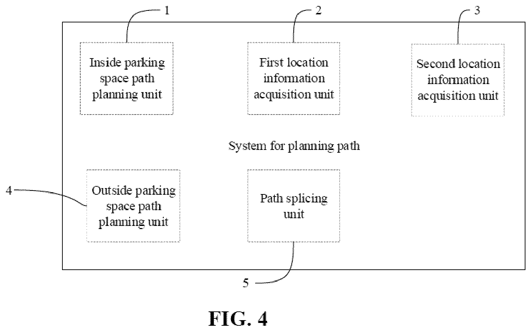

FIG. 4 is a schematic structural diagram of a planning parking path system in an embodiment of the present disclosure.

DETAILED DESCRIPTION

Various exemplary embodiments, features, and aspects of the present disclosure will be described in detail below with reference to accompanying drawings. In addition, in order to better illustrate the present disclosure, numerous specific details are given in the following specific embodiments. It will be understood by those skilled in the art that the present disclosure may be practiced without certain of specific details. In some embodiments, means well known to those skilled in the art are not described in detail in order to highlight a gist of the present disclosure.

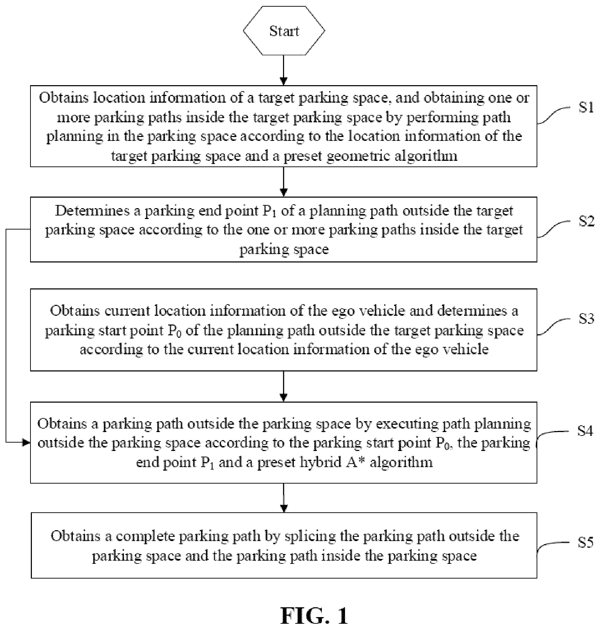

An embodiment of the present disclosure provided a planning parking path method , which is suitable for planning the parking path in a small parking space and is difficult to park, including but not limited to automatic parking in parallel parking spaces. Referring to FIG. 1, the method includes following blocks S1~S5.

Block S1, obtaining location information of a target parking space, and obtaining one or more parking paths inside the target parking space by performing path planning in the parking space according to the location information of the target parking space and a preset geometric algorithm.

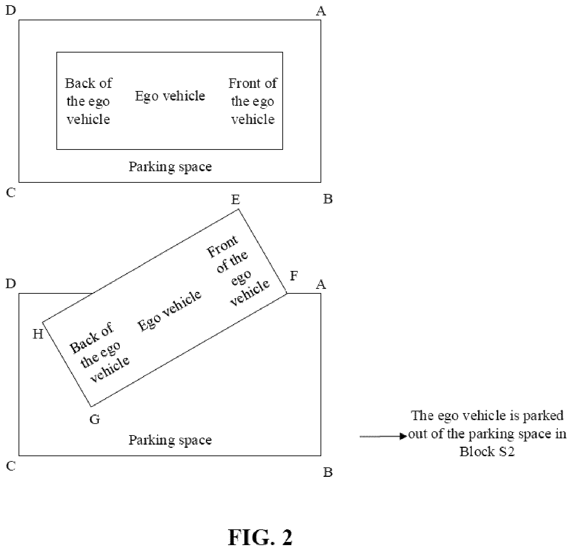

Specifically, when parking an ego vehicle, a perception system of the ego vehicle obtains perception information by perceiving surrounding environment of the ego vehicle and determines the location information of the target parking space according to the perception information. The location information may be related location coordinates of the target parking space which is determined based on a world coordinate system. In one embodiment, a parallel parking space is taken as an example for specific introduction. For example, by determining the location coordinates of four corner points of the target parking space (as shown in FIG. 2, the four points A, B, C, and D). Then, the location of the target parking space in the world coordinate system can be determined. The establishment of the coordinate system is only to determine the location of each target parking space, so as to facilitate path planning calculation and parking the vehicle into the parking space. The establishment of the coordinate system does not substantially affect implementation effect of the present embodiment.

Referring to FIG. 2, the target parking space is a parallel parking space that the ego vehicle currently needs to park in. Obviously, because the ego vehicle will eventually park in the target parking space, a parking end point $P_1$ is a position point in the target parking space. Specifically, the parking end point $P_1$ can be selected according to a preset strategy. For example, the parking end point P1 is a center point of the target parking space, and of course the parking end point $P_1$ can also be other positions in the target parking space. The selection of the parking end point $P_1$ only needs to meet a requirement that when a preset feature point $P_{S1}$ of the ego vehicle overlaps with the parking end point $P_1$, and the ego vehicle successfully parks in the target parking space.

Block S2, determining a parking end point $P_1$ of a planning path outside the target parking space according to the one or more parking paths inside the target parking space.

Specifically, in one embodiment, the planning of the parking path is divided into two parts, one part is to plan a planning path inside the parking space, and the other part is to plan a planning path outside the parking space. Finally, the method obtains a complete parking path by splicing the planning path inside the parking space and the planning path outside the parking space. Therefore, the planning path inside the parking space and the planning path outside the parking space, which are obtained from the two parts, can be spliced. Based on this, after obtaining the one or more parking paths inside the parking space in block S1, it is necessary to obtain the corresponding parking path outside the parking space based on the one or more parking paths inside the parking space. Therefore, in block S2, determining the parking end point $P_1$ of the planning path outside the target parking space according to the one or more parking paths inside the target parking space enables the subsequently obtained parking path outside the parking space to be spliced with the parking paths obtained in block S1.

Block S3, obtaining current location information of the ego vehicle and determining a parking start point $P_0$ of the planning path outside the target parking space according to the current location information of the ego vehicle.

Specifically, the parking starting point $P_0$ is current position of a preset first feature point $P_{S1}$ of the ego vehicle. It should be noted that the preset first feature point $P_{S1}$ is used as a reference for the position of the ego vehicle. It is not limited to a particular position, such as a center of mass of the ego vehicle, or the center of the ego vehicle, or a center of a rear axle of the ego vehicle, etc.

It should be noted that the block S2 and the block S3 can be executed simultaneously.

Block S4, obtaining a parking path outside the parking space by executing path planning outside the parking space according to the parking start point $P_0$, the parking end point $P_1$ and a preset hybrid A* algorithm.

Block S5, obtaining a complete parking path by splicing the parking path outside the parking space and the parking path inside the parking space.

The method of this embodiment divides the parking path planning into two parts: one part is to plan the path planning inside the parking space, and another part is to plan the path planning outside the parking space. In the part of planning the path planning inside the parking space, according to the location information of the target parking space, the geometric algorithm is used to plan the path planning inside the parking space to obtain one or more parking paths inside the target parking space. And further, according to the one or more parking paths inside the target parking space, the parking end point of the planning path outside the target parking space is determined. At the same time, taking the current location information of the ego vehicle as parking start point of the planning path outside the target parking space, and using the hybrid A* algorithm to obtain the parking path outside the parking space by executing path planning outside the parking space. Finally, obtains the complete parking path by splicing the parking path outside the parking space and the corresponding parking path inside the parking space. The present disclosure combines the geometric algorithm and the hybrid A* algorithm to plan the parking path of parallel parking spaces. The hybrid A* algorithm can realize trajectory solution under any posture, and the geometric algorithm can balance planning efficiency. So the method can quickly obtain the parking path under any posture and, at the same time, improve the success rate of parallel parking planning, facilitate parallel parking, and greatly improve the user experience of parking.

Preferably, the block S1 includes:

Block S11, determining a parking end point $P_2$ of the complete parking path according to the location information of the target parking space.

Block S12, taking the parking end point $P_2$ as a starting point, planning the path inside the parking space for the ego vehicle to park out of the target parking space from the starting point, and obtaining the one or more parking paths inside the target parking space.

Specifically, assuming that the ego vehicle plans to park out of the target parking space starting from the parking end point $P_2$, if the ego vehicle can successfully park out the target parking space along a parking path, it must also successfully park into the target parking space in the reverse direction along the parking path.

Based on this concept, the geometric algorithm is provided in this embodiment, and one or more parking paths inside the target parking space are obtained by reverse the way of parking out the target parking space.

Specifically, the path planning inside the parking space is planned by using a traditional geometric algorithm. When the ego vehicle is parked, a driver will generally try to turn a steering wheel of the ego vehicle to move the ego vehicle forward or backward and maintain a certain safe distance from a vehicle boundary to see if it can be successfully parked. If the target parking space is large, the driver will also park the ego vehicle out of the target parking space by moving backwards or forwards in a straight line and then turning the steering wheel. Therefore, when planning the parking path in reverse, use the following method:

Referring to FIG. 2, the ego vehicle is tried to be drive in six directions by turning the steering wheel and keeps a certain safe distance from front and rear boundaries of the parking space, and the six directions are: turning left and going forward, turning left and going backward, turning right and going forward, turning right and going backward, straight forward, and straight backward. The safe distance is preferably but not limited to 20 cm until a front corner point of the ego vehicle reaches an outer boundary of a side of the target parking space and has a certain safety distance from a corner point A of the target parking space, and until a front corner point F of the ego vehicle reaches the outer boundary of the parking space and has a certain safety distance from the corner point A of the target parking space, which means that the ego vehicle parked out of the target parking space successfully.

Preferably, the block S2 includes:
Block S21, when obtaining a parking path inside the parking space by parking the ego vehicle out of the target parking space, record a location of a preset second feature point $P_{S2}$ of the ego vehicle as a key point when the ego vehicle parking out the target parking space successfully.

Block S22, determining the parking end point $P_1$ of the planning path outside the target parking space according to one or more key points corresponding to the one or more parking paths inside the target parking space.

Specifically, the key point can be understood as a joining point of the parking path inside the target parking space and the parking path outside the target parking space. In addition to determine the parking path inside the target parking space, there is another very important aspect in planning the parking path inside the target parking space, which is to determine the joining point. Based on the above description, it can be understood that each parking path inside the target parking space will have a corresponding key point/joining point, therefore, after obtaining the one or more parking paths inside the parking space, one or more key points $P_K$ is obtained correspondingly.

Preferably, the method includes:
Selecting an optimal key point from multiple key points as the parking end point $P_1$ of the planning path outside the target parking space without putting back the selected key point if there are multiple key points.

And, if planning the parking path outside the parking space fails according to the parking start point $P_0$, the parking end point $P_1$ and the preset hybrid A* algorithm, then re-selecting an optimal key point from the remaining key points as the parking end point $P_1$ of the planning path outside the target parking space. Continuing to obtain the parking path outside the parking space by executing path planning outside the parking space according to the parking start point $P_0$, a reselected parking end point $P_1$ and the preset hybrid A* algorithm and repeat the above blocks until obtaining a collision-free parking path outside the parking space. Or when there are no remaining key points, it is determined that the path planning fails, and the path planning outside the parking space is ended.

For example, n key points are obtained by constantly trying to drive the ego vehicle according to the six directions, and a key point set $K=\{P_{K1}, P_{K2}, .......P_{Kn}\}$ is obtained according to the n key points. And each key point corresponds to a planning path outside the target parking space while the car is successfully parked outside the target parking space. That is, the parking path inside the parking spac Select an optimal key point from the key points of the key point set $K=\{PK_1, P_{K2}, ......P_{Kn}\}$ as the current optimal key point $K_{best}$. Obtaining a parking path outside the parking space without collision by performing path planning with the parking start point P0 as the starting point, and the optimal key point $K_{best}$ as the parking end point $P_1$ of the path planning outside the parking space.

Specifically, only one path is required for parking the ego vehicle, so only one of the key points needs to be applied, and one of the key points needs to be selected. It should be noted that a way to select the current optimal key point $K_{best}$ in this embodiment is not limited to a certain one. A purpose for selecting the current optimal key point $K_{best}$ is to make parking more convenient, reduce difficulty of parking or complexity of parking operations. It should be understood that all ways to select the current optimal key point $K_{best}$ are within protection scope of the present disclosure.

It should be noted that although there must be a path between two points, the actual situation is that when planning the parking path outside the target parking space, there may be some obstacles, so that the path between the two points is blocked. At this time, then a parking path outside the parking space cannot be obtained, and the path planning outside the parking space fails. Therefore, in one embodiment, the way to select the optimal key point from the n key points of the key point set $K=\{P_{K1}, P_{K2}, ......P_{Kn}\}$ as the current optimal key point is to select a key point as the current optimal key point $K_{best}$ without putting back the selected key point. When it fails, it is necessary to determine whether a number of the remaining key points in the key point set K is equal to 0. If the number of the remaining key points is not equal to 0, selecting the optimal key point as the current optimal key point $K_{best}$ from one or more key points selected from remaining key points from the key point set K without putting back the selected key point according to a preset optimal strategy. And continue to plan a parking path outside the parking space by setting the parking start point $P_0$ as the starting point, and the optimal key point $K_{best}$ as the parking end point $P_1$ of the path planning outside the parking space, until obtaining a parking path outside the parking space without collision successfully, or until the remaining key points in the key point set K are equal to 0, the path planning outside the parking space in block S4 is ended.

Preferably, the selection of the optimal key point specifically includes:

Obtaining each heading angle of the ego vehicle when the feature point of the ego vehicle is overlapped with each key point and obtaining a distance d between a corner point F of the ego vehicle when the head of the ego vehicle is close to the target parking space and a corner point A of the target parking space close to the corner point F.

Filtering the multiple key points according to several heading angles and several distances d corresponding to the multiple key points and obtaining an optimal key point according to a filtered result.

Specifically, the smaller the heading angle of the ego vehicle, the better, which is beneficial to reduce an angle swing of the vehicle entering the parking space. And the larger the distance d, the better, which is conducive to avoiding collisions. Therefore, in this embodiment, a comprehensive consideration of the heading angle and distance d are used to filter the multiple key points.

The following is an example of an optimal selection strategy. The objective function of the strategy can be expressed as the following formula:

$$\text{Min } \{k1 * yaw + k2 * (length - d)\};$$

Wherein, yaw is the heading angle of the ego vehicle corresponding to the key point, length is a preset length value, preferably but not limited to the length of the parking space, and d is the distance between the corner point F of the ego vehicle and the corner point A of the target parking space as shown in FIG. 2, "length-d" indicates that the farther the corner point F is from the corner point A, the better, so as to avoid collisions; k1 and k2 are weight coefficients, which can be pre-calibrated and adjusted through experiments.

Preferably, the block S4 includes:

Block S41, obtaining obstacle information in the surrounding environment of the ego vehicle.

Specifically, the obstacle information can be obtained through a perception system of the ego vehicle. For example, obstacles of the obstacle information can include pedestrians, other vehicles and other traffic participants, and for example, other obstacles such as roadblocks, which will not be described in detail here. Obstacle information specifically refers to location information of the obstacles, so as to facilitate collision determination in the subsequent hybrid A* search process.

Block S42, searching for paths according to the obstacle information, the parking start point $P_0$, the parking end point $P_1$ and the preset hybrid A* algorithm, and determining whether the ego vehicle will collide with an obstacle while the ego vehicle is driving from the parking start point $P_0$ to the parking end point $P_1$ to make the preset second feature point $P_{S2}$ coincides with the parking end point $P_1$.

It should be noted that the first feature point $P_{S1}$ and second feature point $P_{S2}$ described in this embodiment can be feature points at the same location or at different locations.

Block S43, in response to a collision-free driving path is searched, outputting the collision-free driving path as the parking path outside the parking space.

Block S44, in response to no collision-free driving path being searched, determining that planning of the parking path outside the parking space fails, and reselecting the parking end point $P_1$ and repeating to plan the parking path outside the parking space or ends.

For example, a heuristic function set by the hybrid A* algorithm is equal to the distance from a current search point to the end point. A cost function set by the hybrid A* algorithm should consider about the distance from the starting point, the number of shifts, the rotation of the steering wheel, etc. And an expected search path should be the shortest distance, and the number of times to shift is the least, and the steering wheel turns as little as possible. Of course, the cost function can also be properly adjusted according to technical requirements, and other relevant factors.

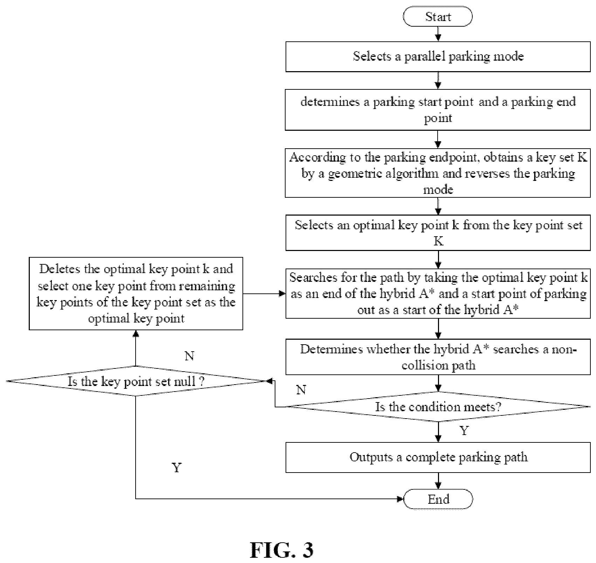

In a specific embodiment, its specific process is shown in FIG. 3. After the vehicle perception system perceives that there is a target parking space (parallel parking space) in the surrounding environment, determining the location information of the target parking space, selecting a parallel parking mode, and further determining the parking start point $P_0$ and the parking end point $P_1$. Further, the geometric algorithm is used to plan the path in the parking space to obtain the key point set K, and the optimal key point $K_{best}$ is used as the search end point of the hybrid A* algorithm, and the parking start point $P_0$ is used as the search starting point of the hybrid A* algorithm to search until a non-collision parking path outside the parking space is found. Finally, based on the association of the splicing points, obtaining a complete parking path by splicing the parking path outside the parking space with parking path inside the parking space. The parking path inside the parking space includes associated splicing point with the parking path outside the parking space.

Preferably, the preset second feature point $P_{S2}$ of the ego vehicle is a center point of the rear axle of the ego vehicle.

It should be noted that the content of the above embodiment has introduced the application of the method of this embodiment in parallel parking spaces. When the method of this embodiment is applied to other parking spaces, similarly, it can be executed according to the above blocks S1~S5, and the planning of the parking path of each type of the parking space is divided into two parts and obtaining the complete parking path by splice two paths obtained from the two parts. For details, please refer to the example of parking in parallel parking spaces above, which will not be described here.

Corresponding to the methods of the above embodiments, another embodiment of the present disclosure also provides a parking path planning system, referring to FIG. 2, the system of this embodiment includes the following multiple functional units:

An inside parking space path planning unit 1 is used to obtain the location information of the target parking space, and obtain one or more parking paths inside the target parking space by performing path planning in the parking space according to the location information of the target parking space and the preset geometric algorithm.

A first location information acquisition unit 2 is used to determine the parking end point $P_1$ of a planning path outside the target parking space according to the one or more parking paths inside the target parking space.

A second location information acquisition unit 3 is used to obtain current location information of the ego vehicle and determine a parking start point $P_0$ of the planning path outside the target parking space according to the current location information of the ego vehicle.

An outside parking space path planning unit 4 is used to plan the path outside the parking space according to the parking starting point $P_0$, the parking end point $P_1$ and the preset hybrid A* algorithm to obtain the parking path outside the parking space.

A path splicing unit 5 is configured to obtain a complete parking path by splicing the parking path outside the parking space and the parking path inside the parking space.

Preferably, the inside parking space path planning unit 1 includes:

The location acquisition subunit is used to acquire the location information of the target parking space, and determine the parking end point $P_2$ of the complete parking path according to the location information of the target parking space.

The path planning subunit is configured to take the parking end point $P_2$ as a starting point, plan the path inside the parking space for the ego vehicle to park out of the target parking space from the starting point, and obtain the one or more parking paths inside the target parking space.

Preferably, the location acquisition subunit is specifically used for:

when obtaining a parking path inside the parking space by parking the ego vehicle out of the target parking space, record a location of a preset second feature point $P_{S2}$ of the ego vehicle as a key point when the ego vehicle parking out the target parking space successfully.

determining the parking end point $P_1$ of the planning path outside the target parking space according to one or more key points corresponding to the one or more parking paths inside the target parking space.

Preferably, wherein:
If there are multiple key points, the location acquisition subunit selects an optimal key point from multiple key points as the parking end point $P_1$ of the planning path outside the target parking space without putting back the selected key point.

And, if the path planning subunit plans the parking path outside the parking space fails according to the parking start point $P_0$, the parking end point $P_1$ and the preset hybrid A* algorithm, then the location acquisition subunit selects the optimal key point from the remaining key points as the parking end point $P_1$ of the planning path outside the target parking space, and continuing to obtain the parking path outside the parking space by executing path planning outside the parking space according to the parking start point $P_0$, the reselected parking end point $P_1$ and the preset hybrid A* algorithm and repeat the above blocks until obtaining a collision-free parking path outside the parking space.

Preferably, the outside parking space path planning unit 4 includes:
An obstacle information acquisition subunit is used to obtain obstacle information in the surrounding environment of the ego vehicle.

The hybrid A* subunit is used to search for paths according to the obstacle information, the parking start point $P_0$, the parking end point $P_1$ and the preset hybrid A* algorithm, and determine whether the ego vehicle will collide with an obstacle while the ego vehicle is driving from the parking start point $P_0$ to the parking end point $P_1$, and in response to a collision-free driving path is searched, output the collision-free driving path as the parking path outside the parking space; in response to no collision-free driving path being searched, determine that planning of the parking path outside the parking space fails or ends.

The system of the above-described embodiments is only illustrative, wherein the units described as separate components may or may not be physically separated, and the components shown as units may or may not be physical units, that is, they may locate in one place, or can be distributed to multiple network elements.

Part or all of the units can be selected according to actual needs to realize the purpose of the solution of the system of the embodiment.

It should be noted that the system of the above-mentioned embodiment corresponds to the method of the above-mentioned embodiment, therefore, the unspecified parts of the system of the above-mentioned embodiment can be obtained by referring to the content of the method of the above-mentioned embodiment, that is, the specific blocks recorded in the method of the above-mentioned embodiment can be understood as the functions that can be realized by the system of the above embodiment, and will not be repeated here.

Moreover, if the system of the above-mentioned embodiment is realized in the form of a software function unit and sold or used as an independent product, it can be stored in a computer-readable storage medium. Therefore, as another embodiment, the present disclosure also proposes a computer-readable storage medium stores a computer program thereon, and when the computer program is executed by a processor, the blocks of the method for planning parking path described in the above-mentioned embodiments are implemented.

From the above description, it can be seen that the various embodiments of the present disclosure divide parking path planning into two parts: inside parking space path planning and outside parking space path planning, which are suitable for parking scenarios including parallel parking spaces, vertical parking spaces, and other situations. In the part of inside parking space path planning, compared to existing technologies that seek planning paths by parking outside the parking space. The embodiments of the present disclosure make it easier to reverse the parking path from the perspective of parking out of the parking space, and can quickly determine the key points and corresponding paths inside the parking space. Furthermore, planning the path outside the parking space with the key points as the end point can quickly obtain a path outside the parking space. By splicing the parking path inside the parking space with the parking path outside the parking space, a complete parking path can be obtained. It can be understood that he various embodiments of the present disclosure determine key points through reverse parking, and based on the key points, the parking paths of the inner and outer parts of the parking space can be determined. Therefore, the parking path in any posture can be quickly solved, especially for parallel parking, which has small parking space and high parking difficulty, which can improve the success rate of parallel parking planning, facilitate parallel parking, and greatly improve the user experience of parking.

Having described various embodiments of the present disclosure, the foregoing description is exemplary, not exhaustive, and is not limited to the disclosed embodiments. Many modifications and alterations will be apparent to those of ordinary skill in the art without departing from the scope and spirit of the described embodiments. The terminology used herein is chosen to best explain the principle of each embodiment, practical application or technical improvement in the market, or to enable other ordinary skilled in the art to understand each embodiment disclosed herein.

**Claims**

1. A parking path planning method, **characterized in that**, the parking path planning method comprising:

   obtaining location information of a target parking space, and obtaining one or more parking paths inside the target parking space by performing path planning in the parking space according to the location information of the target parking space and a preset geometric algorithm;
   determining a parking end point $P_1$ of a planning path outside the target parking space according to the one or more parking paths inside the target parking space;
   obtaining current location information of an ego vehicle and determining a parking start point $P_0$ of the planning path outside the target parking space according to the current location information of the ego vehicle;
   obtaining a parking path outside the parking space by executing path planning outside the parking space according to the parking start point $P_0$, the parking end point $P_1$ and a preset hybrid A* algorithm; and
   obtaining a complete parking path by splicing the parking path outside the parking space and the parking path inside the parking space.

2. The method according to claim 1, **characterized in that**, wherein the obtaining one or more parking paths inside the target parking space by performing path planning in the parking space according to the location information of the target parking space and the preset geometric algorithm comprises:

   determining a parking end point $P_2$ of the complete parking path according to the location information of the target parking space;
   taking the parking end point $P_2$ as a starting point, planning the path inside the parking space for the ego vehicle to park out of the target parking space from the starting point to obtain the one or more parking paths inside the target parking space.

3. The method according to claim 2, **characterized in that**, wherein the determining the parking end point $P_1$ of the planning path outside the target parking space according to the one or more parking paths inside the target parking space comprises:

when obtaining a parking path inside the parking space by parking the ego vehicle out of the target parking space, recording a location of a preset feature point of the ego vehicle as a key point when the ego vehicle parking out the target parking space successfully; and
determining the parking end point $P_1$ of the planning path outside the target parking space according to one or more key points corresponding to the one or more parking paths inside the target parking space.

4. The method according to claim 3, **characterized in that**, wherein the method further comprises:

selecting an optimal key point from multiple key points as the parking end point $P_1$ of the planning path outside the target parking space without putting back the selected key point if there are a plurality of key points;
selecting an optimal key point from the remaining key points as the parking end point $P_1$ of the planning path outside the target parking space if planning the parking path outside the parking space fails according to the parking start point $P_0$, the parking end point $P_1$ and the preset hybrid A* algorithm and continuing to obtain the parking path outside the parking space by executing path planning outside the parking space according to the parking start point $P_0$, the reselected parking end point $P_1$ and the preset hybrid A* algorithm until obtaining a collision-free parking path outside the parking space.

5. The method according to claim 4, **characterized in that**, wherein the selecting the optimal key point from the plurality of key points comprises:

obtaining each heading angle of the ego vehicle when the feature point of the ego vehicle is overlapped with each key point and obtaining a distance d between a corner point F of the ego vehicle when the head of the ego vehicle is close to the target parking space and a corner point A of the target parking space close to the corner point F; and
filtering the plurality of key points according to a plurality of heading angles and a plurality of distances d corresponding to the plurality of key points and obtaining the optimal key point according to a filtered result.

6. The method according to claim 4, **characterized in that**, wherein the obtaining the parking path outside the parking space by executing path planning outside the parking space according to the parking start point $P_0$, the parking end point $P_1$ and the preset

hybrid A* algorithm comprises:

obtaining obstacle information in the surrounding environment of the ego vehicle;
searching for paths according to the obstacle information, the parking start point $P_0$, the parking end point $P_1$ and the preset hybrid A* algorithm, and determining whether the ego vehicle will collide with an obstacle while the ego vehicle is driving from the parking start point $P_0$ to the parking end point $P_1$;
in response to a collision-free driving path is searched, outputting the collision-free driving path as the parking path outside the parking space; and
in response to no collision-free driving path being searched, determining that planning of the parking path outside the parking space fails, and reselecting the parking end point $P_1$ and repeating planning the parking path outside the parking space or ending.

7. The method according to any one of claims 1~6, **characterized in that**, wherein the preset feature point of the can is a center point of a rear axle of the ego vehicle.

8. A parking path planning system, **characterized in that**, the parking path planning system comprising:

an inside parking space path planning unit, is configured to obtain location information of a target parking space, and obtaining one or more parking paths inside the target parking space by performing path planning in the parking space according to the location information of the target parking space and a preset geometric algorithm;
a first location information acquisition unit, is configured to determine the parking end point $P_1$ of a planning path outside the target parking space according to the one or more parking paths inside the target parking space;
a second location information acquisition unit, is configured to obtain current location information of an ego vehicle and determine a parking start point $P_0$ of the planning path outside the target parking space according to the current location information of the ego vehicle;
an outside parking space path planning unit, is configured to obtain a parking path outside the parking space by executing path planning outside the parking space according to the parking start point $P_0$, the parking end point $P_1$ and a preset hybrid A* algorithm; and
a path splicing unit, is configured to obtaining a complete parking path by splicing the parking path outside the parking space and the parking path inside the parking space.

9. The system according to claim 8, **characterized in that**, wherein the inside parking space path planning unit comprising:

a location acquisition subunit, is configured to acquire the location information of the target parking space, and determine the parking end point $P_2$ of the complete parking path according to the location information of the target parking space;
a geometric planning subunit, is configured to take the parking end point $P_2$ as a starting point, plan the path inside the parking space for the ego vehicle to park out of the target parking space from the starting point to obtain the one or more parking paths inside the target parking space.

10. The system according to claim 9, **characterized in that**, wherein the location acquisition subunit is configured to:

when obtain a parking path inside the parking space by parking the ego vehicle out of the target parking space, record a location of a preset feature point of the ego vehicle as a key point when the ego vehicle parking out the target parking space successfully; and
determine the parking end point $P_1$ of the planning path outside the target parking space according to each of one or more key points corresponding to the each of the one or more parking paths inside the target parking space.

11. The system according to claim 10, **characterized in that**, wherein the location acquisition subunit selects an optimal key point from multiple key points as the parking end point $P_1$ of the planning path outside the target parking space without putting back the selected key point if there are a plurality of key points; and
the path planning subunit selects an optimal key point from the remaining key points as the parking end point $P_1$ of the planning path outside the target parking space if planning the parking path outside the parking space fails according to the parking start point $P_0$, the parking end point $P_1$ and the preset hybrid A* algorithm and continue to obtain the parking path outside the parking space by executing path planning outside the parking space according to the parking start point $P_0$, the reselected parking end point $P_1$ and the preset hybrid A* algorithm until obtain a collision-free parking path outside the parking space.

12. The system according to claim 10, **characterized in that**, wherein the outside parking space path planning unit comprising:

an obstacle information acquisition subunit is used to obtain obstacle information in the surrounding environment of the ego vehicle; and
a hybrid A* subunit is used to search for paths according to the obstacle information, the parking start point $P_0$, the parking end point $P_1$ and the preset hybrid A* algorithm, and determine whether the ego vehicle will collide with an obstacle while the ego vehicle is driving from the parking start point $P_0$ to the parking end point $P_1$, and in response to a collision-free driving path is searched, output the collision-free driving path as the parking path outside the parking space; in response to no collision-free driving path being searched, determine that planning of the parking path outside the parking space fails, and reselect a parking end point $P_1$ and plan the parking path outside the parking space or end.

Start

Obtains location information of a target parking space, and obtaining one or more parking paths inside the target parking space by performing path planning in the parking space according to the location information of the target parking space and a preset geometric algorithm — S1

Determines a parking end point $P_1$ of a planning path outside the target parking space according to the one or more parking paths inside the target parking space — S2

Obtains current location information of the ego vehicle and determines a parking start point $P_0$ of the planning path outside the target parking space according to the current location information of the ego vehicle — S3

Obtains a parking path outside the parking space by executing path planning outside the parking space according to the parking start point $P_0$, the parking end point $P_1$ and a preset hybrid A* algorithm — S4

Obtains a complete parking path by splicing the parking path outside the parking space and the parking path inside the parking space — S5

# FIG. 1

**FIG. 2**

FIG. 3

Start

Selects a parallel parking mode

determines a parking start point and a parking end point

According to the parking endpoint, obtains a key set K by a geometric algorithm and reverses the parking mode

Selects an optimal key point k from the key point set K

Deletes the optimal key point k and select one key point from remaining key points of the key point set as the optimal key point

Searches for the path by taking the optimal key point k as an end of the hybrid A* and a start point of parking out as a start of the hybrid A*

Determines whether the hybrid A* searches a non-collision path

N

Is the key point set null ?

Is the condition meets?

N

Y

Outputs a complete parking path

Y

End

FIG. 4

## INTERNATIONAL SEARCH REPORT

| International application No. |
| --- |
| **PCT/CN2022/127122** |

| A. | CLASSIFICATION OF SUBJECT MATTER |
| --- | --- |

G01C 21/34(2006.01)i; B60W 30/06(2006.01)i

According to International Patent Classification (IPC) or to both national classification and IPC

| B. | FIELDS SEARCHED |
| --- | --- |

Minimum documentation searched (classification system followed by classification symbols)

G01C,B60W

Documentation searched other than minimum documentation to the extent that such documents are included in the fields searched

Electronic data base consulted during the international search (name of data base and, where practicable, search terms used)

CNTXT, ENTXT, DPI, CNABS, CNKI: 泊车, 路径, 算法, 混合A, 车位外, 位置, parking, path, algorithm, hybrid A star, outside, position

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 110806218 A (BEIJING JINGDONG QIANSHI TECHNOLOGY CO., LTD.) 18 February 2020 (2020-02-18) claims 1 and 6 | 1-12 |
| A | CN 111301409 A (CHINA FAW CO., LTD.) 19 June 2020 (2020-06-19) abstract | 1-12 |
| A | CN 111026133 A (BEIJING YIKONGZHIJIA TECHNOLOGY CO., LTD.) 17 April 2020 (2020-04-17) abstract | 1-12 |
| A | CN 113554551 A (HUIZHOU FORYOU GENERAL ELECTRONICS CO., LTD.) 26 October 2021 (2021-10-26) abstract | 1-12 |
| A | CN 111746523 A (SANY SPECIAL PURPOSE VEHICLE CO., LTD.) 09 October 2020 (2020-10-09) abstract | 1-12 |

☐ Further documents are listed in the continuation of Box C.      ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **11 January 2023** | **20 January 2023** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/127122**

| Patent document cited in search report | | | Publication date (day/month/year) | Patent family member(s) | | | Publication date (day/month/year) |
|---|---|---|---|---|---|---|---|
| CN | 110806218 | A | 18 February 2020 | None | | | |
| CN | 111301409 | A | 19 June 2020 | WO | 2021180035 | A1 | 16 September 2021 |
| CN | 111026133 | A | 17 April 2020 | None | | | |
| CN | 113554551 | A | 26 October 2021 | None | | | |
| CN | 111746523 | A | 09 October 2020 | None | | | |

Form PCT/ISA/210 (patent family annex) (January 2015)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210450169